# EUROPEAN PATENT SPECIFICATION

(11) **EP 3 138 997 B1**
(45) Date of publication and mention of the grant of the patent: **21.01.2026**
(21) Application number: 16184882.5
(22) Date of filing: 19.08.2016
(51) Int. Cl.: F01D 5/20

(54) **TURBINE ROTOR BLADE WITH SQUEALER TIP AND WINGLET**
TURBINENLAUFSCHAUFEL MIT SCHAUFELSPITZENWANNE UND WINGLET
AUBE ROTORIQUE DE TURBINE AVEC BAIGNOIRE D'EXTRÉMITÉ ET AILETTE

(30) Priority: 02.09.2015 US 201514843069
(43) Date of publication of application: 08.03.2017
(73) Proprietor: GE Vernova Technology GmbH, 5400 Baden (CH)
(72) Inventor: CHOUHAN, Rohit, 560066 Bangalore (IN); JAISWAL, Shashwat Swami, 560066 Bangalore (IN)
(74) Representative: Novagraaf Group

(56) References cited:
- EP-A1- 2 666 968
- EP-A1- 2 987 956
- EP-A1- 3 061 914
- EP-A1- 3 064 713
- EP-A1- 3 088 674
- EP-A2- 1 898 052
- EP-A2- 2 148 042
- WO-A1-2016/071620

## Description

### BACKGROUND OF THE INVENTION

The present invention relates generally to the design of the tips of gas turbine rotor blades. More specifically, but not by way of limitation, the present invention relates to configurations of rotor blade tips that enhance aerodynamic and cooling performance.

In a gas turbine engine, it is well known that air is pressurized in a compressor and used to combust a fuel in a combustor to generate a flow of hot combustion gases, whereupon such gases flow downstream through one or more turbines so that energy can be extracted therefrom. In accordance with such a turbine, generally, rows of circumferentially spaced rotor blades extend radially outward from a supporting rotor disc. Each blade typically includes a root that permits assembly and disassembly of the blade in a corresponding slot formed in the rotor disc, as well as an airfoil that extends away from the root in a radially outward direction.

The airfoil has a generally concave pressure side and generally convex suction side extending axially between corresponding leading and trailing edges and radially between a root and a tip. It will be understood that the blade tip is spaced closely to a radially outer turbine shroud for minimizing leakage therebetween of the combustion gases flowing downstream between the turbine blades. Maximum efficiency of the engine is obtained by minimizing the tip clearance or gap such that leakage is prevented, but this strategy is limited somewhat by the different thermal and mechanical expansion and contraction rates between the rotor blades and the turbine shroud and the motivation to avoid an undesirable scenario of having excessive tip rub against the shroud during operation.

Because turbine blades are bathed in hot combustion gases, effective cooling is required for ensuring a useful part life. Typically, the blade airfoils are hollow and disposed in flow communication with the compressor so that a portion of pressurized air bled therefrom is received for use in cooling the airfoils. Airfoil cooling in certain areas of the rotor blade is quite sophisticated and may be employed using various forms of internal cooling channels and features, as well as cooling outlets through the outer walls of the airfoil for discharging the cooling air. Nevertheless, airfoil tips are particularly difficult to cool since they are located directly adjacent to the turbine shroud and are heated by the hot combustion gases that flow through the tip gap. Accordingly, a portion of the air channeled inside the airfoil of the blade is typically discharged through the tip for the cooling thereof.

It will be appreciated that conventional blade tip design includes several different geometries and configurations that are meant to prevent leakage and increase cooling effectiveness, as well as, improve aerodynamic performance and reduce mixing losses. However, conventional blade tip cooling designs, particularly those having a "squealer tip" design, have certain shortcomings, including the inefficient usage of compressor bypass air, which reduces plant efficiency. As a result, an improved turbine blade tip design that increases the overall effectiveness of the coolant directed to this region would be highly desired.

EP 3 064 713 A1 (representing state of the art in accordance with Article 54(3) EPC) relates to a turbine rotor blade and corresponding turbine section. EP 3 088 674 A1 (representing state of the art in accordance with Article 54(3) EPC) relates to a rotor blade and corresponding gas turbine. EP 2 148 042 A2 relates to a blade for a rotor, such as a turbine rotor of a gas turbine engine, having a squealer tip comprising a peripheral wall which defines a cavity. A first region of the peripheral wall extends radially, with its outer surface forming a continuation of the adjacent aerofoil surface of the blade. A second region extends obliquely with respect to the radial direction and the adjacent part of the aerofoil surface. The second region defines a winglet, and serves to increase the width of the chamber towards the trailing edge of the blade. WO 2016/071620 A1 corresponding to EP 3 215 714 (representing state of the art in accordance with Article 54(3) EPC) relates to a turbine blade having an end cap. EP 2 987 956 A (representing state of the art in accordance with Article 54(3) EPC) relates to a compressor aerofoil. EP 3 061 914 A1 (representing state of the art in accordance with Article 54(3) EPC) relates to a turbine rotor blade and corresponding gas turbine engine. EP 2 666 968 A1 relates to a turbine rotor blade. EP 1 898 052 A2 relates to a flared tip turbine blade.

### BRIEF DESCRIPTION OF THE INVENTION

The present invention thus describes a rotor blade for a turbine of a gas turbine system. The rotor blade includes an airfoil that includes a pressure sidewall and a suction sidewall defining an outer periphery, wherein the pressure sidewall and suction sidewall of the airfoil connect along a leading edge and a trailing edge; a tip that defines an outer radial end of the airfoil, wherein the tip includes a cap from which an outboard projecting rail defines a tip cavity; the rail including a pressure rail and a suction rail that correspond, respectively, to the pressure sidewall and the suction sidewall of the airfoil; a winglet formed by radially outwardly flaring the suction rail and a part of the suction sidewall at the tip of the airfoil; and a rail gap formed through an aftward section of the rail, wherein the rail gap is formed through the suction rail and comprises a section truncated from the suction rail that comprises approximately 20% of a chordwise length of the suction rail.

These and other features of the present invention will become apparent upon review of the following detailed description of the preferred embodiments when taken in conjunction with the drawings and the appended claims.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic representation of an exemplary gas turbine in which blades according to embodiments of the present application may be used;
FIG. 2 is a sectional view of the compressor section of the gas turbine of FIG. 1;
FIG. 3 is a sectional view of the turbine section of the gas turbine of FIG. 1;
FIG. 4 is a perspective view of an exemplary rotor blade assembly including a rotor, a turbine blade, and a stationary shroud;
FIG. 5 is a perspective view the rotor blade of FIG. 4;
FIG. 6 is a magnified perspective view of the squealer tip of the rotor blade of FIG. 4;
FIG. 7 is an alternative perspective view of the squealer tip of the rotor blade of FIG. 4;
FIG. 8 is a cross-sectional view along 8-8 of FIG. 7;
FIG. 9 illustrates a side view of a turbine rotor blade that includes a winglet that corresponds to certain aspects of the present invention;
FIG. 10 illustrates a top view of the winglet of FIG. 9;
FIG. 11 illustrates a perspective view of a blade tip configuration in accordance with an exemplary embodiment of the present invention;
FIG. 12 illustrates a perspective view of a blade tip configuration in accordance with an embodiment not falling within the scope of the claims;
FIG. 13 illustrates a perspective view of a blade tip configuration in accordance with an embodiment not falling within the scope of the claims;
FIG. 14 illustrates a perspective view of a blade tip configuration in accordance with an embodiment of the present invention;
FIG. 15 illustrates a perspective view of a blade tip configuration in accordance with an embodiment not falling within the scope of the claims; ; and
FIG. 16 illustrates a perspective view of a blade tip configuration in accordance with an embodiment not falling within the scope of the claims.

The detailed description explains embodiments of the invention, together with advantages and features, by way of example with reference to the drawings.

### DETAILED DESCRIPTION OF THE INVENTION

Aspects and advantages of the invention are set forth below in the following description, or may be obvious from the description, or may be learned through practice of the invention. Reference will now be made in detail to present embodiments of the invention, one or more examples of which are illustrated in the accompanying drawings. The detailed description uses numerical designations to refer to features in the drawings. Like or similar designations in the drawings and description may be used to refer to like or similar parts of embodiments of the invention. As will be appreciated, each example is provided by way of explanation of the invention, not limitation of the invention. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claims. It is to be understood that the ranges and limits mentioned herein include all sub-ranges located within the prescribed limits, inclusive of the limits themselves, unless otherwise stated. Additionally, certain terms have been selected to describe the present invention and its component subsystems and parts. To the extent possible, these terms have been chosen based on the terminology common to the technology field. Still, it will be appreciated that such terms often are subject to differing interpretations. For example, what may be referred to herein as a single component, may be referenced elsewhere as consisting of multiple components, or, what may be referenced herein as including multiple components, may be referred to elsewhere as being a single component. In understanding the scope of the present invention, attention should not only be paid to the particular terminology used, but also to the accompanying description and context, as well as the configuration, function, and/or usage of the component being referenced and described, including the manner in which the term relates to the several figures, and, of course, the precise usage of the terminology in the appended claims. Further, while the following examples are presented in relation to a certain type of gas turbine or turbine engine, the technology of the present invention also may be applicable to other types of turbine engines as would the understood by a person of ordinary skill in the relevant technological arts.

Several descriptive terms may be used throughout this application so to explain the functioning of turbine engines and/or the several sub-systems or components included therewithin, and it may prove beneficial to define these terms at the onset of this section. Accordingly, these terms and their definitions, unless stated otherwise, are as follows. The terms "forward" and "aft" or "aftward", without further specificity, refer to directions relative to the orientation of the gas turbine. "Forward" refers to the compressor end of the engine, while "aft" or "aftward" refers to the turbine end of the engine. Each of these terms, thus, may be used to indicate movement or relative position along the longitudinal axis of the machine. The terms "downstream" and "upstream" are used to indicate position within a specified conduit relative to the general direction of flow moving through it. As will be appreciated, these terms reference a direction relative to the direction of flow expected through the specified conduit during normal operation, which should be plainly apparent to any skilled in the art. As such, the term "downstream" refers to the direction in which the fluid is flowing through the specified conduit, while "upstream" refers to the opposite of that. Thus, for example, the primary flow of working fluid through a gas turbine, which begins as air moving through the compressor and then becomes combustion gases within the combustor and beyond, may be described as beginning at an upstream location toward an upstream or forward end of the compressor and terminating at an downstream location toward a downstream or aft end of the turbine.

In regard to describing the direction of flow within a common type of combustor, as discussed in more detail below, it will be appreciated that compressor discharge air typically enters the combustor through impingement ports that are concentrated toward the aft end of the combustor (relative to the combustors longitudinal axis and the aforementioned compressor/turbine positioning defining forward/aft distinctions). Once in the combustor, the compressed air is guided by a flow annulus formed about an interior chamber toward the forward end of the combustor, where the air flow enters the interior chamber and, reversing it direction of flow, travels toward the aft end of the combustor. In yet another context, the flow of coolant through cooling channels or passages may be treated in the same manner.

Additionally, given the configuration of compressor and turbine about a central common axis, as well as the cylindrical configuration common to many combustor types, terms describing position relative to an axis may be used herein. In this regard, it will be appreciated that the term "radial" refers to movement or position perpendicular to an axis. Related to this, it may be required to describe relative distance from the central axis. In this case, for example, if a first component resides closer to the central axis than a second component, the first component will be described as being either "radially inward" or "inboard" of the second component. If, on the other hand, the first component resides further from the central axis than the second component, the first component will be described herein as being either "radially outward" or "outboard" of the second component. Additionally, as will be appreciated, the term "axial" refers to movement or position parallel to an axis. Finally, the term "circumferential" refers to movement or position around an axis. As mentioned, while these terms may be applied in relation to the common central axis that extends through the compressor and turbine sections of the engine, these terms also may be used in relation to other components or sub-systems of the engine.

Finally, the term "rotor blade", without further specificity, is a reference to the rotating blades of either the compressor or the turbine, which include both compressor rotor blades and turbine rotor blades. The term "stator blade", without further specificity, is a reference to the stationary blades of either the compressor or the turbine, which include both compressor stator blades and turbine stator blades. The term "blades" will be used herein to refer to either type of blade. Thus, without further specificity, the term "blades" is inclusive to all type of turbine engine blades, including compressor rotor blades, compressor stator blades, turbine rotor blades, and turbine stator blades.

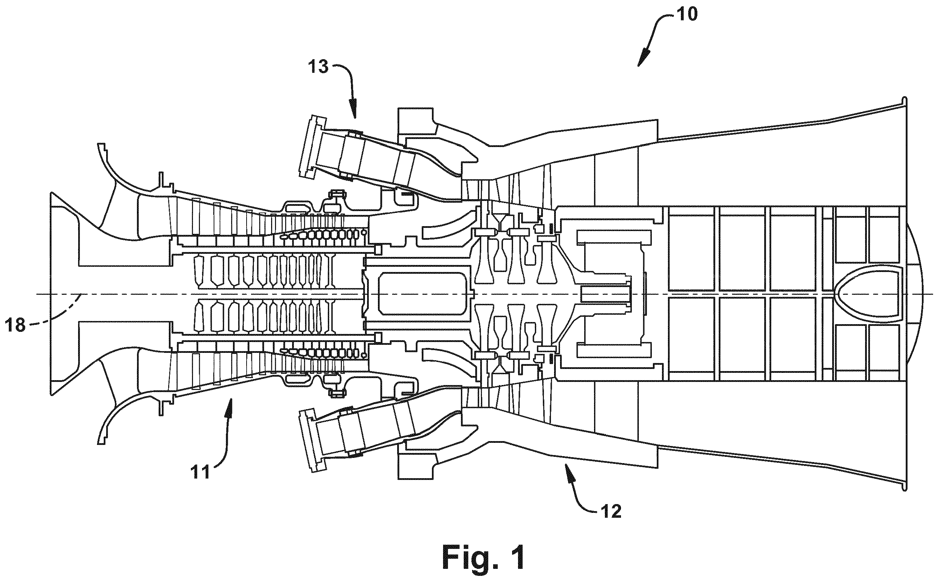

By way of background, referring now to the figures, FIGS. 1 through 3 illustrate an exemplary gas turbine in which embodiments of the present invention may be used. It will be understood by those skilled in the art that the present invention may not be limited to this type of usage. The present invention may be used in gas turbines, such as the engines used in power generation and airplanes, steam turbine engines, and other types of rotary engines. Accordingly, unless otherwise stated, the examples provided are not meant to be limiting to a particular type of turbine engine. FIG. 1 is a schematic representation of a gas turbine system 10. In general, gas turbine systems operate by extracting energy from a pressurized flow of hot gas produced by the combustion of a fuel in a stream of compressed air. As illustrated in FIG. 1, the gas turbine system 10 may include an axial compressor 11 that is mechanically coupled by a common shaft or rotor to a downstream turbine section or turbine 12, and a combustor 13 positioned between the compressor 11 and the turbine 12. As illustrated in FIG. 1, the gas turbine system 10 may be formed about a common central axis 18.

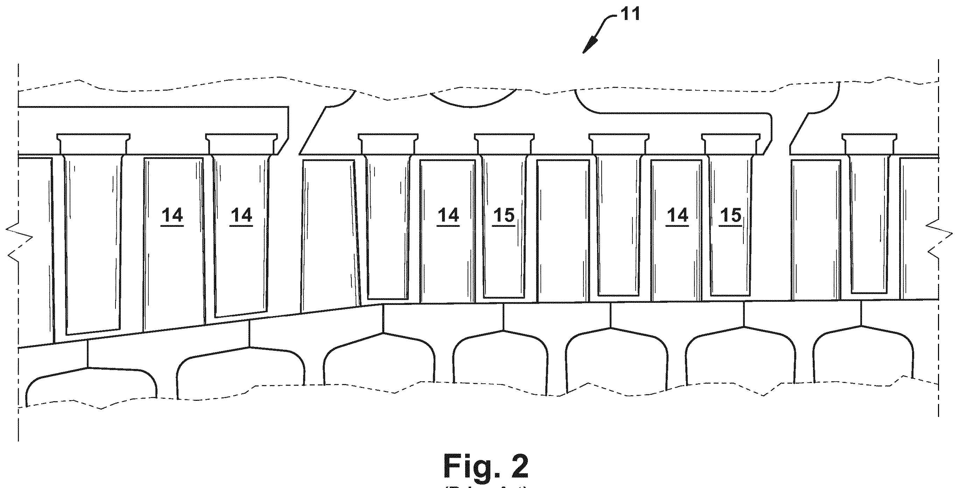

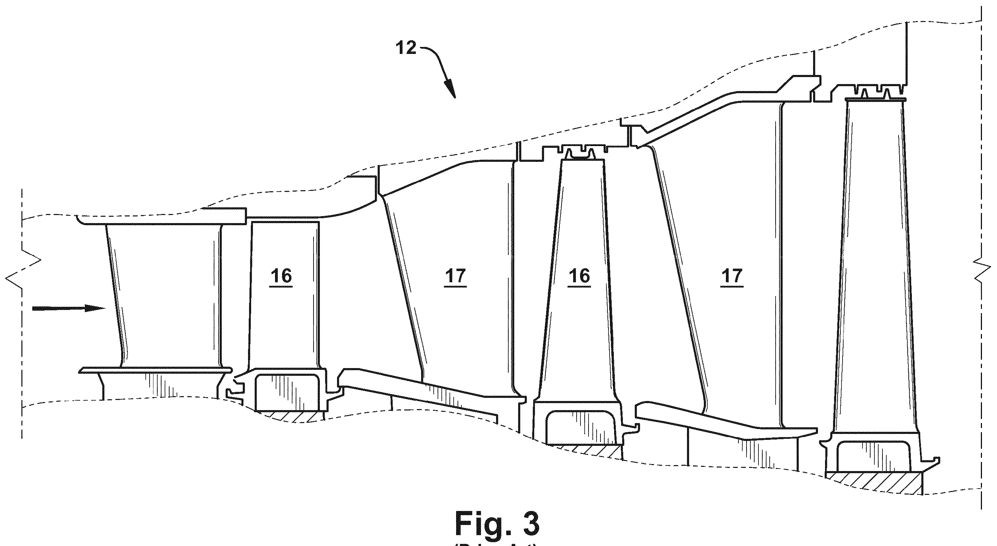

FIG. 2 illustrates a view of an exemplary multi-staged axial compressor 11 that may be used in the gas turbine system 10 of FIG. 1. As shown, the compressor 11 may include a plurality of stages, each of may include a row of compressor rotor blades 14 followed by a row of compressor stator blades 15. Thus, a first stage may include a row of compressor rotor blades 14, which rotate about a central shaft, followed by a row of compressor stator blades 15, which remain stationary during operation. FIG. 3 illustrates a partial view of an exemplary turbine section or turbine 12 that may be used in the gas turbine system 10 of FIG. 1. The turbine 12 may include a plurality of stages. Three exemplary stages are illustrated, but more or less stages may be present in the turbine 12. A first stage includes a plurality of turbine buckets or turbine rotor blades 16, which rotate about the shaft during operation, and a plurality of nozzles or turbine stator blades 17, which remain stationary during operation. The turbine stator blades 17 generally are circumferentially spaced one from the other and fixed about the axis of rotation. The turbine rotor blades 16 may be mounted on a rotor wheel or disc (not shown) for rotation about a central shaft (not shown). A second stage and third stage of the turbine 12 also are illustrated. Each of these also may include a plurality of circumferentially spaced turbine stator blades 17 followed by a plurality of circumferentially spaced turbine rotor blades 16, which are also mounted on a rotor disc for connection to the central shaft. It will be appreciated that the turbine stator blades 17 and turbine rotor blades 16 lie in the hot gas path of the turbine 12. The direction of flow of the hot gases through the hot gas path is indicated by the arrow. As one of ordinary skill in the art will appreciate, the turbine 12 may have more or less stages than those shown in FIG. 3.

In one example of operation, the rotation of the rotor blades 14 within the axial compressor 11 compresses a flow of air. In the combustor 13, energy is released when the compressed air flow is mixed with a fuel and ignited. The resulting flow of hot gases from the combustor 13, which may be referred to as the working fluid, is then directed over the turbine rotor blades 16, with the flow of working fluid thereby inducing the rotation of the rotor blades 16 about the shaft. In this manner, the energy of the flow of working fluid may be transformed into the mechanical energy of the rotating blades and, given the connection between the rotor blades and the shaft via the rotor disc, the rotating shaft. The mechanical energy of the shaft then may be used to drive the rotation of the compressor rotor blades, such that the necessary supply of compressed air is produced, and also, for example, a generator for the production of electricity.

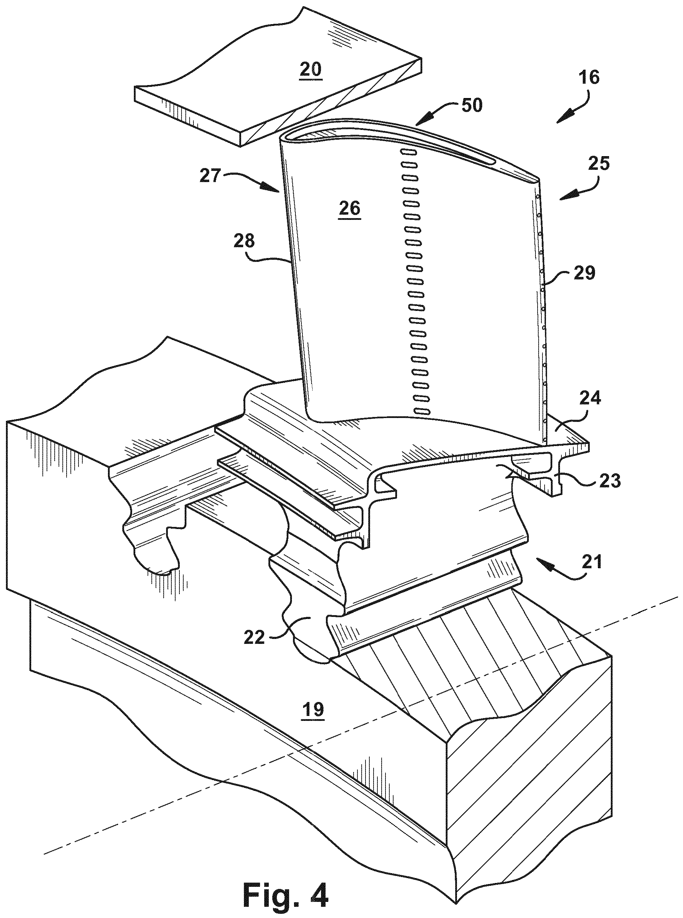

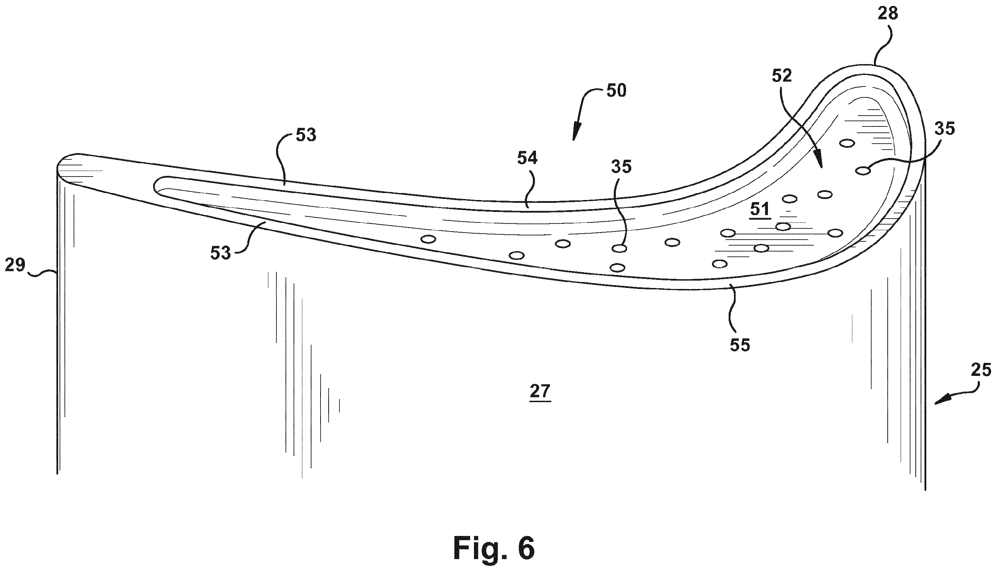

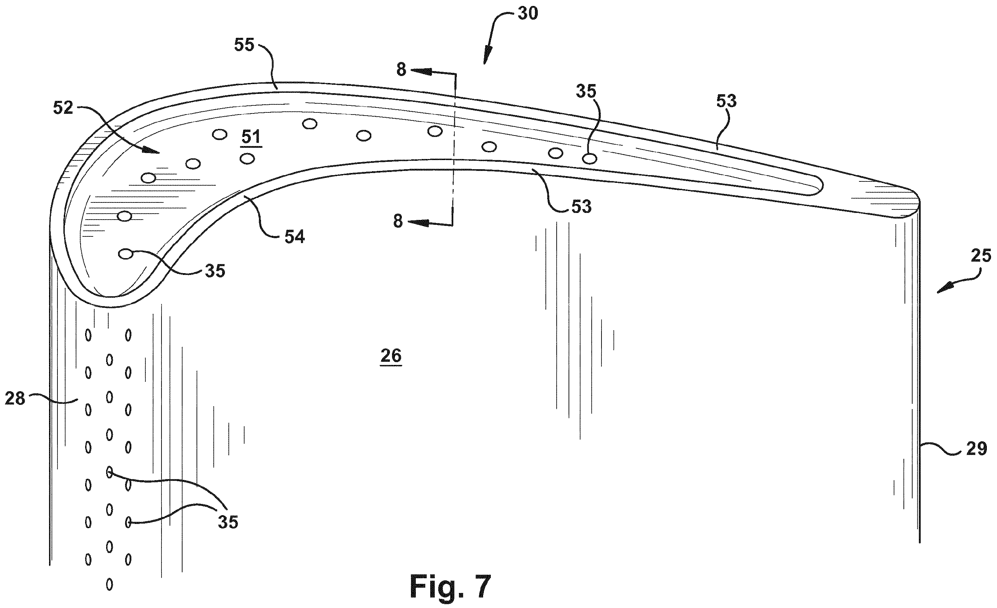

For background purposes, FIGS. 4 through 7 provide views of a turbine rotor blade 16 in which aspects of the present invention may be practiced. These figures are provided to illustrate certain common configurations of turbine rotor blades and, particularly, the outboard tip of such blades, as well as to demonstrate the types of aerodynamic, structural, geometrical, and other constraints that affect their overall design. In addition to these, keeping the rotor blades cool during operation is another significant design consideration. As will be appreciate, this often includes actively circulating coolant through the blades during operation as a means to reduce thermal loads, extend useful life, and enable higher firing temperatures in the engines. Because the efficiency of the gas turbine engines improves as firing temperatures rise, there is a continuing need for improving and optimizing such designs, and there is a particular need for improved configurations at the outboard tips of rotor blades because of the inherent design difficulties that correspond with this region. Because active cooling typically includes releasing significant coolant flows through rotor blade tips and areas that surround them, such designs must take into account losses associated with the mixing of the released coolant and the flow of working fluid. Designs that reduce these losses, while also not negatively impacting the cooling effect of the release coolant represent further efficiency gains for the system. Of course, any new cooling and aerodynamic configuration also must provide a robust structure capable of enduring the extreme mechanical loads associated with the hot gas path and the rotational velocities of the engine.

FIG. 4 is a perspective view of an exemplary rotor blade assembly within the hot gas path of a combustion or gas turbine system. It will be appreciated that such rotor blades may be formed in any conventional manner, such as an one-piece casting process or some combination of casting and post-cast processes. As illustrated, the assembly of FIG. 4 includes a turbine rotor blade 16 as well as surrounding inboard and outboard components. More specifically, inboard of the rotor blade 16, the assembly includes a rotor disc 19. It will be appreciated that the rotor disc 19 provides the rotating structure that carries a row of rotor blades, which may be circumferentially spaced about the periphery of the rotor disc 19. The rotor disc 19 connects the rotor blades 16 to the central shaft of the turbine 12. Thus mounted into the rotor disc 19, the rotor blade 16 may extend radially outward from it along a longitudinal axis that is radially oriented within the turbine 12. In the outboard direction, an annular turbine shroud 20 may surround the rotor blade 16 such that a relatively small clearance or gap remains therebetween that limits leakage of combustion gases during operation.

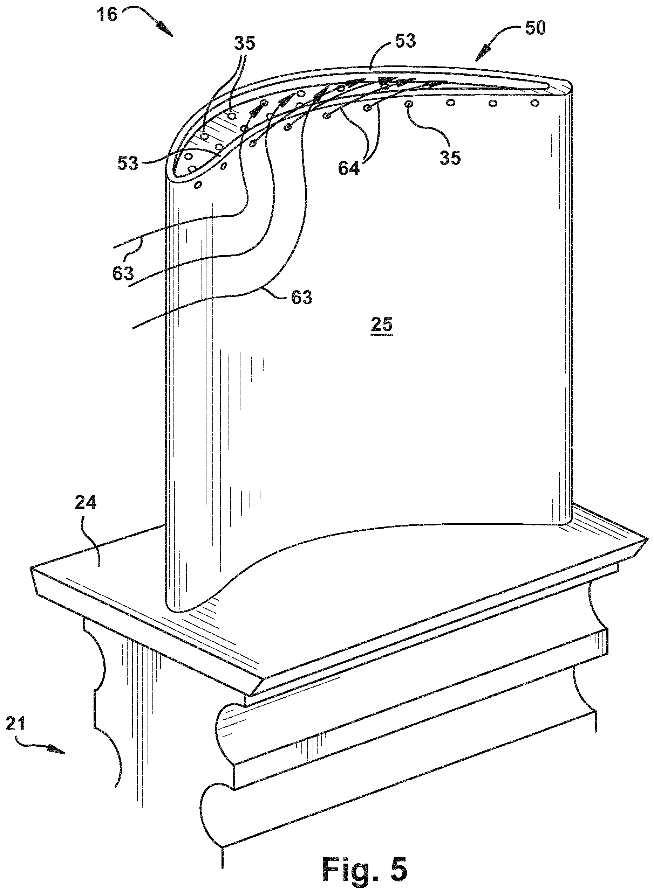

With reference also to FIGS. 5 through 8, the rotor blade 16 may include a root 21, which may have any conventional form, that includes a connector 22 for attaching the rotor blade 16 to the rotor disc 19. The connector 22, for example, may have a dovetail configuration that is configured for mounting in a corresponding dovetail slot formed in the perimeter of the rotor disc 19. As illustrated, the root 21 may further include a shank 23 that connects the dovetail of the connector 21 to a platform 24. Extending from the platform, the rotor blade 16 further includes an airfoil 25 that may be integrally joined to the root 21. The airfoil 25, as illustrated, may extend radially outward from the platform 24. As will be appreciated, the rotor blade 16 may be configured so that the platform 24 is disposed at the junction of the airfoil 25 and the root 21 and thereby defines a portion of the radially inner boundary of the flow path through the turbine 12. The airfoil 25 includes a pressure sidewall 26 that may be generally concave and, circumferentially or laterally opposite that, a suction sidewall 27 that may be generally convex. As indicated, the pressure sidewall 26 and the suction sidewall 27 extend axially between opposite leading 28 and trailing edges 29. The sidewalls 26, 27 also extend in the radial direction from the platform 24 to a radially outer portion of the rotor blade, which will be referred to herein as a blade tip 50.

In general, rotor blades may include blade tips that are shrouded or, as illustrated, unshrouded. In the case of unshrouded tips, the blade tip 50, as illustrated, may include a tip cap or cap 51 that is disposed atop the radially outer edges of the pressure 26 and suction sidewalls 27. The cap 51 typically bounds interior cooling passages (which, as provided below, are referenced herein as a "cooling passages 36") that may be defined between the pressure 26 and suction sidewalls 27 of the airfoil 25. As is typical, coolant, such as compressed air bled from the compressor, may be circulated through the cooling passages 36 during operation. The cooling passages 36 may be supplied the coolant via connector channels (not shown) that are formed through the root 21 of the rotor blade 16. The cap 51 typically includes a plurality of outlet ports 35 that connect to the cooling passages 36. During operation, the outlet ports 35 release coolant after it has circulated through the interior of the airfoil 25 and may be positioned to promote film cooling over the surface of the blade tip 50. The cap 51 may be integral to the rotor blade 16 or a portion may be welded/brazed into place after the rotor blade is cast.

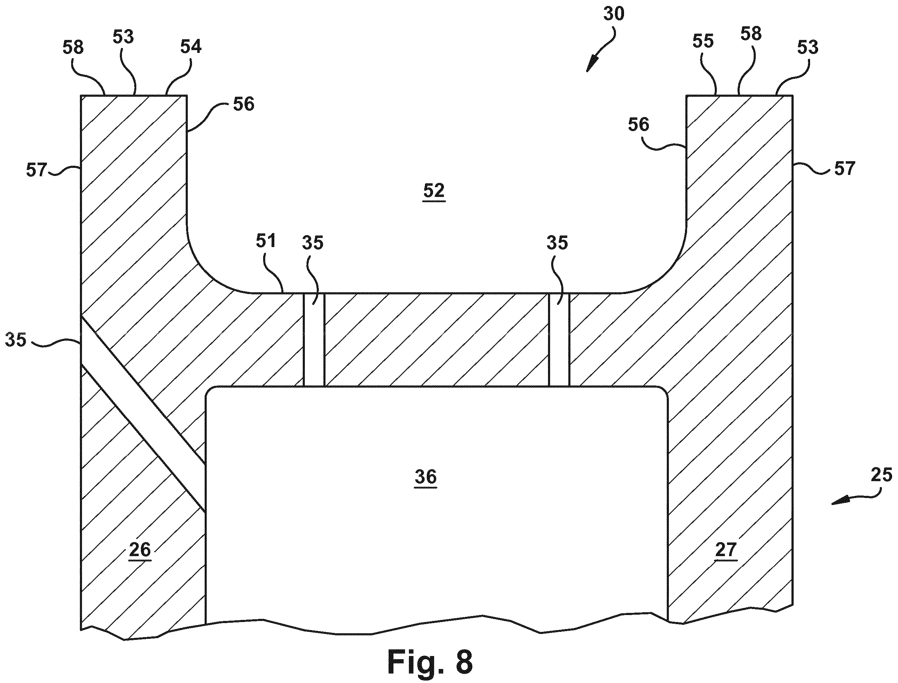

Due to certain performance advantages, such as those related to greater aerodynamic and cooling efficiencies, the tips 50 of rotor blades frequently include a tip cavity 52 formed via one or more rails 53 that project radially from the cap 51. This type of blade tip is commonly referred to as a "squealer tip" or, alternatively, as a tip having a "squealer pocket" or "squealer cavity." The positioning of the one or more rails 53 may coincide approximately with the profile of the pressure 26 and suction sidewalls 27 of the airfoil 25. As such, the one or more rails 53 may be referred to as including, respectively, a pressure rail 54 and a suction rail 55. The pressure rail 54, as illustrated, may extend radially outward from the cap 51 and, in relation thereto, may form an angle of approximately 90°. The pressure rail 54 may extend from a position near the leading edge 28 of the airfoil 25 to a position near the trailing edge 29. As illustrated, the path of the pressure rail 54 coincides approximately with the profile of the pressure sidewall 26. Similarly, as illustrated, the suction rail 55 may project radially outward from the cap 51 and be approximately perpendicular therewith. The suction rail 55 may extend from a position near the leading edge 28 of the airfoil 25 to a position near the trailing edge 29. As illustrated, the path of the suction rail 55 coincides approximately with the profile of the suction sidewall 27. Further, as indicated in FIG. 8, the pressure rail 54 and the suction rail 55 both may be described as having an inner rail surface 56, which defines and faces the tip cavity 52, and an outer rail surface 57, which is on the opposite side of the rail 53 and, thus, faces outwardly and away from the tip cavity 52. At the outer radial end of the rail 53, an outboard rail surface 58 may face in the outboard direction. As will be appreciated, the cap 51 may be described as defining the floor of the tip cavity 52.

Those of ordinary skill in the art will appreciate that squealer tips of rotor blade in which the present invention is employed might vary somewhat from the characteristics described above. For example, the rail 53 may not necessarily follow precisely the profile of the outer radial edge of the pressure and/or suction sidewalls 26, 27. That is, in alternative types of blades tips, the tip rails 53 may be moved away from the outer periphery of the cap 51. In addition, as provided herein, the tip rails 53 may not surround the tip cavity completely and, in certain cases, as provided herein, large gaps may be formed within the tip rails 53, therein, particularly in the portion of the rail 53 positioned toward the trailing edge 29 of the airfoil. In some cases, sections of the rail 53 might be removed from either the pressure side or the suction side of the tip 50. Alternatively, one or more internal rails or ribs may be positioned between the pressure rail 54 and suction rails 55.

The tip rail 53, as shown, generally, is configured to circumscribe the cap 51 such that the tip cavity 52 is defined thereon. The height and width of the pressure rail 54 and/or the suction rail 55 (and, thus, the depth of the tip cavity 52) may be varied depending on best performance and the size of the overall turbine assembly. It will be appreciated that the cap 51 forms the floor of the tip cavity 52 (i.e., the inner radial boundary of the tip cavity), the tip rail 53 forms the sidewalls of the tip cavity 52, and that the tip cavity 52 remains open through an outer radial face, which, once installed within a turbine engine, is bordered closely by a stationary shroud 20 (as shown in FIG. 4) that is radially offset therefrom a short distance.

A plurality of outlet ports 35 may be disposed on the blade tip 50 as well as through the other outer surfaces of the airfoil 25. Typically, outlet ports 35 are provided through the pressure sidewall 26 of the airfoil 25 as well as through the cap 51. Some designs position many such outlet ports 35 in the limited space available at the tip 35 in an effort to flood the pressures side tip region with coolant. In regard to the outlet ports 35 disposed on the pressure sidewall 26, it may be desired that, after its released, the coolant carries over the pressure rail 54 and into the tip cavity 52 to provide cooling therein and, then, over the suction rail 55 to provide cooling to this region. Toward this objective, the outlet ports 35 may be oriented so to direct coolant being expelled therefrom in the radially outward direction. As illustrated in FIG. 8, the outlet ports 35 also may be canted with respect to the outer surface of airfoil 25. This angled introduction of coolant may limit mixing to a degree, thereby reducing the mixing losses associated therewith, while promoting the film cooling effectiveness of the coolant after its release. Nevertheless, in practice, it is still very difficult to cool the blade tip 50 due to the complex nature of the cooling flow as it mixes with dynamic hot gases of the mainstream flow, and further technological advances are needed. For example, as shown in FIG. 5, the hot gases of the working fluid (generally illustrated as arrows 63) may be directed over airfoil 25 and exerts motive forces upon the outer surfaces of airfoil 25, which in turn then drive the turbine and generates power. The cooling flow (generally illustrated by arrows 64) exits outlet ports 35 and is swept by hot air flow 63 towards the trailing edge 29 of airfoil 25 and away from tip cavity 52. Typically, this results in a mixed effect, where some of the cooling air is caught up and mixed with the hot gases, some goes into the tip cavity 52, and some goes axially along the airfoil to trailing edge 29. This may result in the usage of excessive cooling air to cool this region, which, as stated, results in reduced plant efficiency. As will be appreciated, unless otherwise stated, the embodiments described herein may be applicable to rotor blades having either radial cooling passages or serpentine.

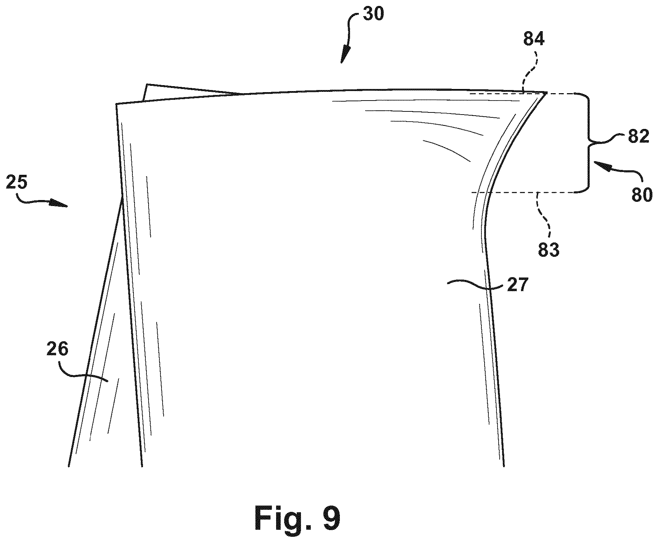

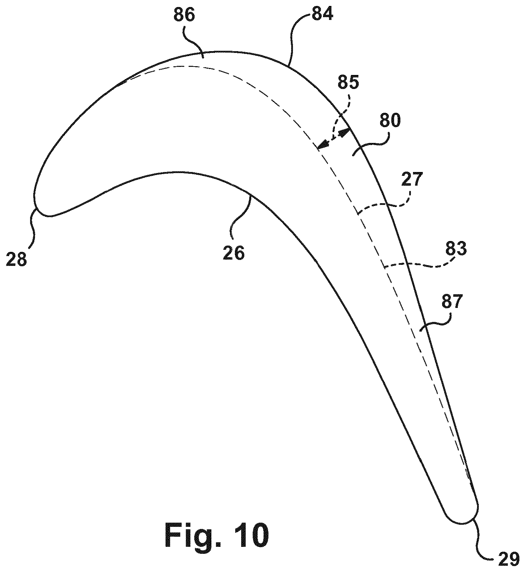

FIGS. 9 and 10 illustrate a winglet 80 that is included at the tip 50 of the airfoil 25. As illustrated, the winglet 80 is positioned on the outboard region of the suction sidewall 27. The winglet 80 may be described as occurring within a radial section 82 defined between an inboard boundary 83 and an outboard boundary 84. Within this section, the winglet 80 includes a region of the airfoil sidewall that angles or bows outwardly with respect to the radial direction. More specifically, the winglet 80 includes an outwardly flaring or enlarging radial section of the suction sidewall or both of the sidewalls of the airfoil in which an inboard boundary 83 that has a smaller circumference transitions to an outboard boundary 84 that has a larger one. This difference in radial section of the outwardly flaring winglet is illustrated in FIG. 10 as thickness 85. As shown in FIG. 9, the winglet 80 may include a smooth, concave contour between the inboard boundary 83 and the outboard boundary 84 of the radial section 82. Other configurations are also possible.

The winglet 80 may further be described as extending between a leading end 86 and a trailing end 87. As illustrated, the leading end 86 of the winglet may be positioned toward the leading edge 28 of the airfoil 25, while the trailing end 87 may be positioned near the trailing edge 29 of the airfoil 25. According to an exemplary embodiment, the leading end 86 of the winglet 80 may be positioned approximately 0% to 50% of a chordwise distance from the leading edge 28 of the airfoil 25, and the trailing end 87 of the winglet 80 may be positioned approximately 50% to 100% of the chordwise distance from the leading edge 28 of the airfoil 25. More preferably, the leading end of the winglet may be positioned approximately 20% to 40% of a chordwise distance from the leading edge, and the trailing end may be positioned approximately 70% to 90% of the chordwise distance from the leading edge.

Additionally, as illustrated, a plurality of cooling outlets 35 may be formed through the cap 51 so to release coolant within the tip cavity 52. The cooling outlets 35 may be connected to one or more cooling passages formed through the airfoil 25. The cooling outlets 35 may have rectangular cross-sectional shape, as illustrated, or may be circular, oval or other shape as required. Though other configurations are also possible, the radial section 82 of the winglet 80 may approximately coincide with the tip rail 53. In such cases, as will be appreciated, the inboard boundary 83 of the winglet 80 may be approximately coplanar with the cap 51, and the outboard boundary 83 of the winglet 80 may be approximately coplanar with the outboard rail surface 58 of the rails 53. According to another embodiment, the winglet 80 may be configured to begin at a radial location that is inboard or outboard of the cap 51.

Because the winglet 80 is inclined outwardly from the radial direction, it should be appreciated that its inclusion may result in widening the tip cavity 52 as the tip cavity 52 extends from the cap 51 in the outboard direction. The result of this is that, in operation, gases leaking over certain areas of the pressure rail 54 encounter a region of the tip cavity 52 that has an increased width. As will be appreciated, this increased width of the tip cavity 52 may enable the overflowing gases more of an opportunity to reattach within the tip cavity, and so remain in contact with the tip 50 longer and, thereby, improve cooling and aerodynamic performance. As discussed below, the winglet 80 feature is used with the certain other aspects of the present invention discussed below so to achieve greater performance benefits.

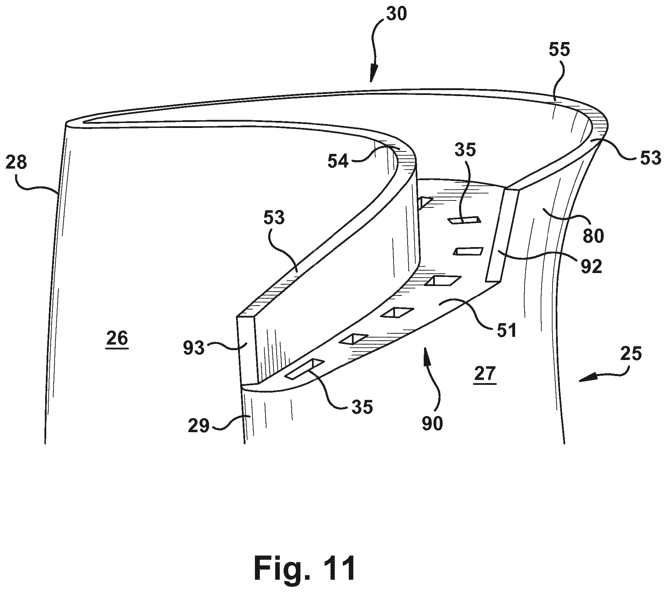

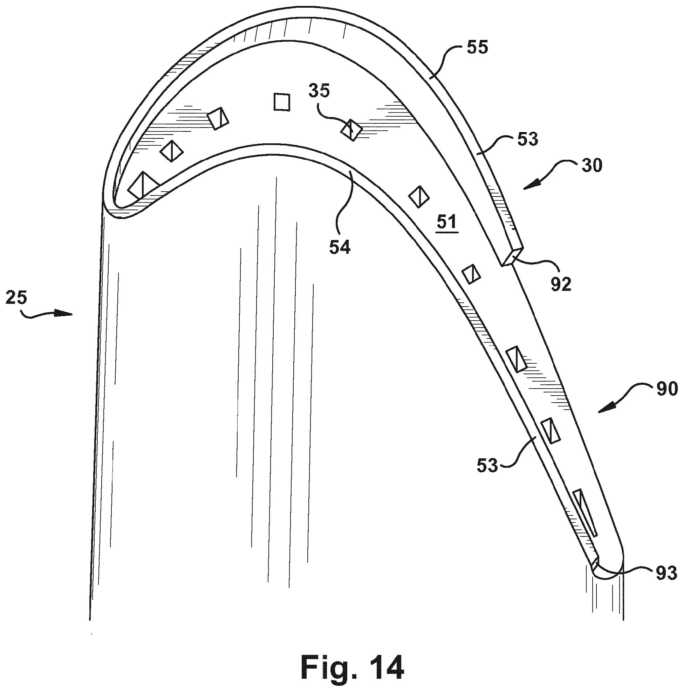

Turning now to FIGS. 11 through 16, exemplary embodiments are shown, of which only the one in figure 14 falls within the scope of the claims, in which a rail gap 90 is formed through the suction rail 55 in a manner that has been found to enhance aspects of rotor blade performance. As shown, according to the invention, the suction rail 55 is truncated-i.e., shortened by removal of a section-so to create a rail gap 90 at or near the trailing edge 29 of the airfoil 25. As illustrated, according to certain preferred embodiments, the pressure rail 54 is formed as one that is not truncated or interrupted. That is, the pressure rail 54 may be configured so that it extends continuously and without interruption between positions that correspond to the leading edge 28 and the trailing edge 29 of the airfoil 25. Given these configurations of the suction and pressure rails 55, 54, the rail gap 90 may be described as defined between a leading boundary 92-which is the trailing end of a truncated suction rail 55-and a trailing boundary 93-which is the trailing end of the uninterrupted pressure rail 54 that extends to a position near the trailing edge 29 of the airfoil 25. According to alternate embodiments, the uninterrupted pressure rail 54 may extend to a position just short, just beyond, or at the trailing edge 29 of the airfoil 25. According to the embodiment shown in FIG. 11, the airfoil 25 includes a winglet 80, as described above in relation to FIGS. 9 and 10, that when used in conjunction with the rail gap 90 provides further advantages.

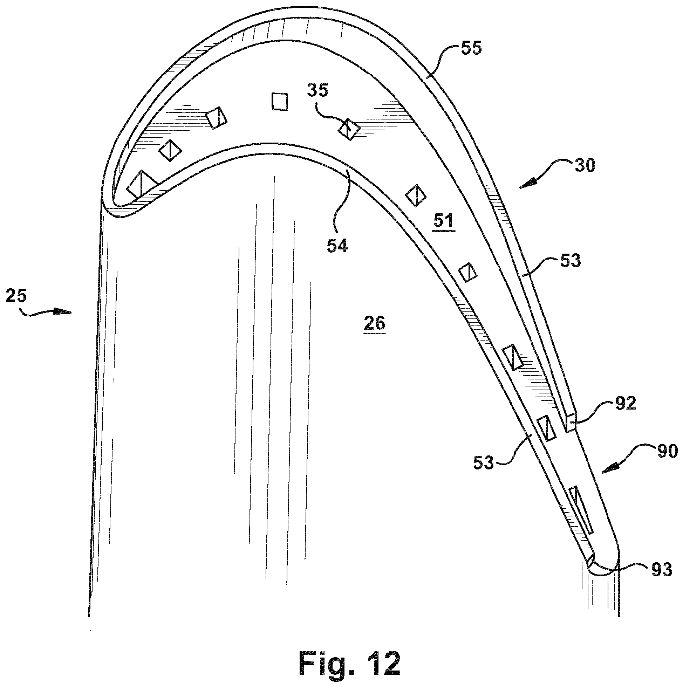

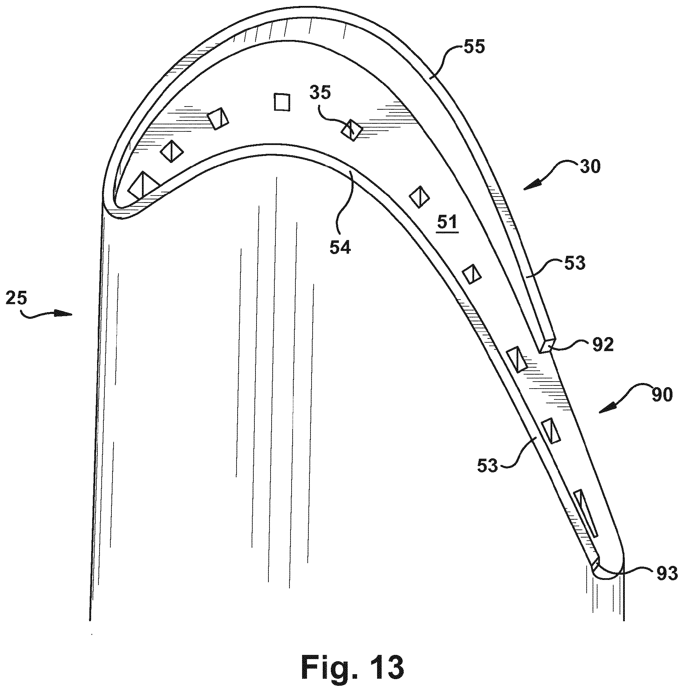

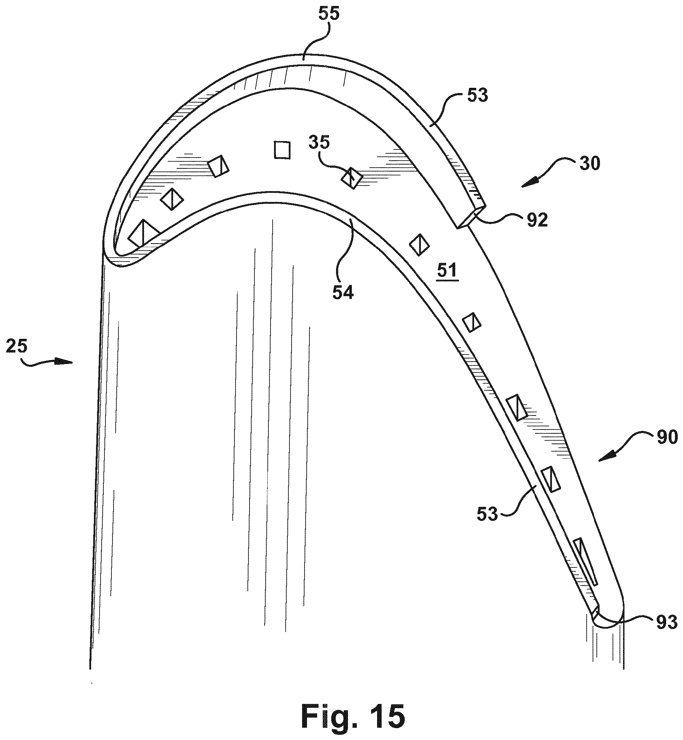

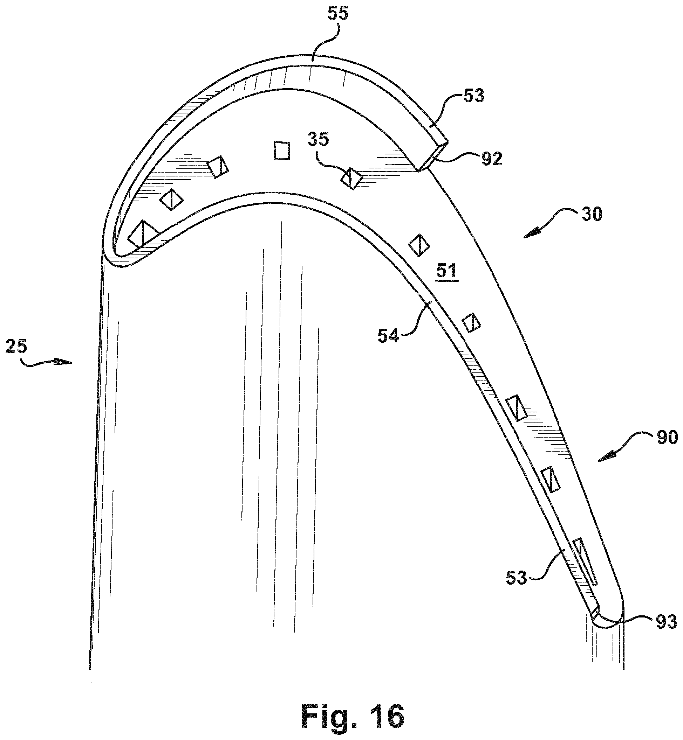

As illustrated via the progressively larger width dimensions of the rail gaps 90 of FIGS. 12 through 16, the rail gap 90 may include a range of sizes and related configurations. For example, the rail gap 90 may include the gap formed by truncating or cutting back the aft portion of the suction rail 55 by between 0% and 40% of the chordwise length of the suction rail 55. Thus, at one end of the spectrum according to the preferred design range-such as the examples depicted in the cases of FIGS. 12 and 13-the cutback may be approximately 10% or 15%, respectively, of the chordwise length of the suction rail 55. At the end of the spectrum according to the preferred design range-such as the examples depicted in the cases of FIGS. 15 and 16-the cutback may be approximately 25% to 35%, respectively, of the chordwise length of the suction rail 55. More preferably, experimental data has confirmed that with regard to many common types of squealer tip design, the cutback may more optimally be near the middle of the given range. According to the invention, one such case is provided in FIG. 14, which shows a cutback of approximately 20% of the chordwise length of the suction rail 55.

According to the invention, the rail gap 90 is combined with a suction side winglet 80, as depicted in the FIG. 11. The suction side winglet 80, as provided in more detail above with reference to FIGS. 9 and 10, may be described as extending between a leading end 86 and a trailing end 87. According to one preferred embodiment, for example, the leading end 86 of the winglet 80 is positioned approximately 0% to 50% of the chordwise distance from the leading edge 28 of the airfoil 25, while the trailing end 87 of the winglet 80 is positioned approximately 50% to 100% of the chordwise distance from the leading edge 28 of the airfoil 25. More preferably, the leading end of the winglet may be positioned approximately 20% to 40% of a chordwise distance from the leading edge, and the trailing end may be positioned approximately 70% to 90% of the chordwise distance from the leading edge. According to certain preferred embodiments, the trailing end 87 may be configured to coincide with the leading boundary 92 the rail gap 90.

Accordingly, the present invention provides a blade tip configuration in which a full or approximately full rail is provided on the pressure rail of the squealer tip, while an optimally truncated rail is provided on the suction rail of the squealer tip. As will be appreciated, the truncated rail forms a rail gap which may be configured to advantageously control the exit of coolant from the blade tip as well as affect over the blade tip leakage flowing toward the aft portions of the suction side of the airfoil. It will be appreciated that by combining the rail gap feature with the winglet, the cross-sectional flow area from the enclosed region of the tip cavity is made larger due to the manner in which the outward flaring of the winglet widens the tip cavity in the radial direction (as the tip cavity extends between the cap and the outer rail surface). By increasing this flow area, the rail gap, according to preferred embodiments, may be optimized at around 15%. At this design point, the flow area from the enclosed portion of the tip cavity is still larger enough to handle all of the extra flow captured by the winglet and/or supplied through outlet ports and induce flow along the desired flowpath, which is basically afterward within the tip cavity for eventual exit through the rail gap. As will be appreciated, without the winglet feature, the same flow area could only be achieved by increasing the size of the rail gap, which would negatively impact performance. Accordingly, rail gaps conforming to the embodiments provided herein, when combined with the winglet feature, have been shown through experimental data to lower mixing losses, increase cooling efficiency, improve rotor blade torque, and provide lower pressures within the tip cavity of the squealer tip, as it establishes aerodynamic communication between the tip cavity and the low pressure region associate with the suction sidewall of the airfoil. As will be appreciated, the reduction in tip cavity pressure by this feature may generally assist in maintaining a relatively lower supply pressure for the blade tip cooling circuit so to improved back flow margin, which, in turn, may result in overall turbine efficiency improvement and reduced risk for rotor blade ingestion and overheating. For example, experimental data suggests that rail gaps such as those disclosed herein may be employed to provide 5-10 psi benefit in tip cavity pressure. Additionally, efficiency benefits associated with such rail gaps have been shown to improve overall system efficiency by approximately 0.1-0.2 points, while also having the flexibility to realize such benefits across a variety of the blade tip configurations, including varied squealer cavity depths and winglet features.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A rotor blade (16) for a turbine (12) of a gas turbine system (10), the rotor blade (16) comprising an airfoil (25) that includes a pressure sidewall (26) and a suction sidewall (27) defining an outer periphery;
wherein the pressure sidewall (26) and suction sidewall (27) of the airfoil (25) connect along a leading edge (28) and a trailing edge (29), and extend radially between a root (21) and a tip (50);
wherein the tip (50) defines an outer radial end of the airfoil (25), the tip (50) including a cap (51) from which an outboard projecting rail (53) defines a tip cavity (52);
wherein the rail (53) includes a pressure rail (54) and a suction rail (55) that correspond, respectively, to the pressure sidewall (26) and the suction sidewall (27) of the airfoil (25);
wherein the airfoil (25) includes a winglet (80) formed by radially outwardly flaring the suction rail (55) and a part of the suction sidewall (27) at the tip of the airfoil (25); and
wherein a rail gap (90) is formed through an aftward section of the rail (53); **characterized in that**
the rail gap (90) is formed through the suction rail (55) and comprises a section truncated from the suction rail (55) that comprises approximately 20% of a chordwise length of the suction rail (55).

2. The rotor blade (16) according to claim 1, wherein the truncated suction rail (55) extends between a position at or near the leading edge (28) of the airfoil (25) and a position removed a predetermined distance from the trailing edge (29) of the airfoil (25), the predetermined distance corresponding to a width of the rail gap (90);
wherein the pressure rail (54) comprises an uninterrupted rail that extends continuously between a position near the leading edge (28) of the airfoil (25) and a position near the trailing edge (29) of the airfoil (25).

3. The rotor blade (16) according to claim 2, wherein the suction rail (55) and the pressure rail (54) connect at the leading edge (28) of the airfoil (25);
wherein the winglet (80) is configured such that the tip cavity (52) widens as the tip cavity (52) extends in an outboard direction between the cap (51) and an outboard rail surface (58) of the rail (53);
wherein the rail gap (90) is defined between a leading boundary (92) and a trailing boundary (93), wherein:
the leading boundary (92) of the rail gap (90) comprises a trailing end of the truncated suction rail (55); and
the trailing boundary (93) of the rail gap (90) comprises a trailing end of the uninterrupted pressure rail (54).

4. The rotor blade (16) according to claim 3, wherein the pressure rail (54) extends aftward from the leading edge (28) of the airfoil (25) along a path that approximately aligns with a profile of the pressure sidewall (26); and
wherein the suction rail (55) extends aftward from the leading edge (28) of the airfoil (25) along a path that approximately aligns with a profile of the suction sidewall (27).

5. The rotor blade (16) according to claim 4, wherein the cap (51) is configured to extend axially and circumferentially to connect the outer radial edge of the suction sidewall (27) to the outer radial edge of the pressure sidewall (26); and
wherein the rail (53) is disposed at a periphery of the cap (51).

6. The rotor blade (16) according to claim 5, further comprising:
a cooling passage defined through the airfoil; and
outlet ports in fluid communication with the cooling passage, wherein at least some of the outlet ports (35) are disposed through at least one of the pressure sidewall (26) and the suction sidewall (27) of the airfoil (25).

7. The rotor blade (16) according to claim 6, wherein the cooling passage (36) is configured for circulating coolant through an interior of the airfoil (25) during operation, the cooling passage (36) extending radially between a connecting channel formed through the root (21) of the rotor blade (16) and a connection with each of the outlet ports (35); and
wherein the tip (50) comprises a squealer tip.

8. The rotor blade (16) according to claim 6 or 7, wherein the cap (51) forms a floor of the tip cavity (52); and
wherein at least some of the outlet ports (35) are formed through a thickness of the cap (51) so to direct coolant expelled therefrom into the tip cavity (52) formed on the cap (51).

## Patentansprüche

1. Rotorblatt (16) für eine Turbine (12) eines Gasturbinensystems (10), das Rotorblatt (16) umfassend ein Luftleitblech (25), das eine Druckseitenwand (26) und eine Saugseitenwand (27) einschließt, die einen Außenumfang definieren;
wobei sich die Druckseitenwand (26) und die Saugseitenwand (27) des Luftleitblechs (25) entlang einer Vorderkante (28) und einer Hinterkante (29) verbinden und sich radial zwischen einer Wurzel (21) und einer Spitze (50) erstrecken;
wobei die Spitze (50) ein äußeres radiales Ende des Luftleitblechs (25) definiert, wobei die Spitze (50) eine Kappe (51) einschließt, von der eine außenbords vorspringende Schiene (53) einen Spitzenhohlraum (52) definiert;
wobei die Schiene (53) eine Druckschiene (54) und eine Saugschiene (55) einschließt, die der Druckseitenwand (26) beziehungsweise der Saugseitenwand (27) des Luftleitblechs (25) entsprechen;
wobei das Luftleitblech (25) ein Winglet (80) einschließt, das durch radial nach außen gerichtetes Aufweiten der Saugschiene (55) und eines Teils der Saugseitenwand (27) an der Spitze des Luftleitblechs (25) ausgebildet ist; und
wobei ein Schienenspalt (90) durch einen nach hinten gerichteten Abschnitt der Schiene (53) ausgebildet ist; **dadurch gekennzeichnet, dass**
der Schienenspalt (90) durch die Saugschiene (55) ausgebildet ist und einen Abschnitt umfasst, der von der Saugschiene (55) abgeschnitten ist, der etwa 20 % einer sehnenweisen Länge der Saugschiene (55) umfasst.

2. Rotorblatt (16) nach Anspruch 1, wobei sich die abgeschnittene Saugschiene (55) zwischen einer Position an oder nahe der Vorderkante (28) des Luftleitblechs (25) und einer Position erstreckt, die um eine zuvor bestimmte Entfernung von der Hinterkante (29) des Luftleitblechs (25) entfernt ist, wobei die zuvor bestimmte Entfernung einer Breite des Schienenspalts (90) entspricht;
wobei die Druckschiene (54) eine ununterbrochene Schiene umfasst, die sich kontinuierlich zwischen einer Position nahe der Vorderkante (28) des Luftleitblechs (25) und einer Position nahe der Hinterkante (29) des Luftleitblechs (25) erstreckt.

3. Rotorblatt (16) nach Anspruch 2, wobei die Saugschiene (55) und die Druckschiene (54) an der Vorderkante (28) des Luftleitblechs (25) verbunden sind;
wobei das Winglet (80) derart konfiguriert ist, dass sich der Spitzenhohlraum (52) erweitert, wenn sich der Spitzenhohlraum (52) in einer Richtung außenbords zwischen der Kappe (51) und einer Schienenoberfläche (58) außenbords der Schiene (53) erstreckt;
wobei der Schienenspalt (90) zwischen einer Vorderbegrenzung (92) und einer Hinterbegrenzung (93) definiert ist, wobei:
die Vorderbegrenzung (92) des Schienenspalts (90) ein Hinterende der abgeschnittenen Saugschiene (55) umfasst; und
die Hinterbegrenzung (93) des Schienenspalts (90) ein Hinterende der ununterbrochenen Druckschiene (54) umfasst.

4. Rotorblatt (16) nach Anspruch 3, wobei sich die Druckschiene (54) von der Vorderkante (28) des Luftleitblechs (25) entlang eines Pfades nach hinten erstreckt, der etwa mit einem Profil der Druckseitenwand (26) ausgerichtet ist; und
wobei sich die Saugschiene (55) von der Vorderkante (28) des Luftleitblechs (25) entlang eines Pfads nach hinten erstreckt, der etwa mit einem Profil der Saugseitenwand (27) ausgerichtet ist.

5. Rotorblatt (16) nach Anspruch 4, wobei die Spitzenkappe (51) konfiguriert ist, um sich axial und in Umfangsrichtung zu erstrecken, um die äußere radiale Kante der Saugseitenwand (27) mit der äußeren radialen Kante der Druckseitenwand (26) zu verbinden; und
wobei die Schiene (53) an einem Umfang der Kappe (51) angeordnet ist.

6. Rotorblatt (16) nach Anspruch 5, ferner umfassend:
einen Kühlkanal, der durch das Luftleitblech definiert ist; und
Auslassöffnungen in Fluidverbindung mit dem Kühlkanal, wobei mindestens einige der Auslassöffnungen (35) durch mindestens eine der Druckseitenwand (26) und der Saugseitenwand (27) des Luftleitblechs (25) angeordnet sind.

7. Rotorblatt (16) nach Anspruch 6, wobei der Kühlkanal (36) zum Zirkulierenlassen von Kühlmittel durch ein Inneres des Luftleitblechs (25) während des Betriebs konfiguriert ist, wobei sich der Kühlkanal (36) radial zwischen einem Verbindungskanal, der durch die Wurzel (21) des Rotorblatts (16) ausgebildet ist, und einer Verbindung mit jedem der Auslassöffnungen (35) erstreckt; und
wobei die Spitze (50) eine Squealer-Spitze umfasst.

8. Rotorblatt (16) nach Anspruch 6 oder 7, wobei die Kappe (51) einen Boden des Spitzenhohlraums (52) ausbildet; und
wobei mindestens einige der Auslassöffnungen (35) durch eine Dicke der Kappe (51) ausgebildet sind, um Kühlmittel, das daraus ausgestoßen wird, in den Spitzenhohlraum (52) zu leiten, der an der Kappe (51) ausgebildet ist.

## Revendications

1. Aube de rotor (16) pour une turbine (12) d'un système de turbine à gaz (10), l'aube de rotor (16) comprenant un profil aérodynamique (25) qui comporte une paroi latérale de pression (26) et une paroi latérale d'aspiration (27) définissant une périphérie externe ;
dans laquelle la paroi latérale de pression (26) et la paroi latérale d'aspiration (27) du profil aérodynamique (25) sont reliées le long d'un bord d'attaque (28) et d'un bord de fuite (29), et s'étendent radialement entre une emplanture (21) et un bout (50) ;
dans laquelle le bout (50) définit une extrémité radiale externe du profil aérodynamique (25), le bout (50) comportant un capuchon (51) à partir duquel un rail en saillie extérieur (53) définit une cavité de bout (52) ;
dans laquelle le rail (53) comporte un rail de pression (54) et un rail d'aspiration (55) qui correspondent, respectivement, à la paroi latérale de pression (26) et à la paroi latérale d'aspiration (27) du profil aérodynamique (25) ;
dans laquelle le profil aérodynamique (25) comporte une ailette (80) formée en évasant radialement vers l'extérieur le rail d'aspiration (55) et une partie de la paroi latérale d'aspiration (27) au niveau du bout du profil aérodynamique (25) ; et
dans laquelle un écart entre les rails (90) est formé à travers une section vers l'arrière du rail (53) ; **caractérisée en ce que**
l'écart entre les rails (90) est formé à travers le rail d'aspiration (55) et comprend une section tronquée du rail d'aspiration (55) qui comprend approximativement 20 % d'une longueur dans le sens de la corde du rail d'aspiration (55).

2. Aube de rotor (16) selon la revendication 1, dans laquelle le rail d'aspiration (55) tronqué s'étend entre une position au niveau ou à proximité du bord d'attaque (28) du profil aérodynamique (25) et une position éloignée d'une distance prédéterminée du bord de fuite (29) du profil aérodynamique (25), la distance prédéterminée correspondant à une largeur de l'écart entre les rails (90) ;
dans laquelle le rail de pression (54) comprend un rail ininterrompu qui s'étend de façon continue entre une position à proximité du bord d'attaque (28) du profil aérodynamique (25) et une position à proximité du bord de fuite (29) du profil aérodynamique (25).

3. Aube de rotor (16) selon la revendication 2, dans laquelle le rail d'aspiration (55) et le rail de pression (54) sont reliés au niveau du bord d'attaque (28) du profil aérodynamique (25) ;
dans laquelle l'ailette (80) est conçue de telle sorte que la cavité de bout (52) s'élargit à mesure que la cavité de bout (52) s'étend dans une direction vers l'extérieur entre le capuchon (51) et une surface de rail extérieure (58) du rail (53) ;
dans laquelle l'écart entre les rails (90) est défini entre une limite d'attaque (92) et une limite de fuite (93), dans laquelle :
la limite d'attaque (92) de l'écart entre les rails (90) comprend une extrémité de fuite du rail d'aspiration (55) tronqué ; et
la limite de fuite (93) de l'écart entre les rails (90) comprend une extrémité de fuite du rail de pression (54) ininterrompu.

4. Aube de rotor (16) selon la revendication 3, dans laquelle le rail de pression (54) s'étend vers l'arrière à partir du bord d'attaque (28) du profil aérodynamique (25) le long d'une trajectoire qui s'aligne approximativement sur un profil de la paroi latérale de pression (26) ; et
dans laquelle le rail d'aspiration (55) s'étend vers l'arrière à partir du bord d'attaque (28) du profil aérodynamique (25) le long d'une trajectoire qui s'aligne approximativement sur un profil de la paroi latérale d'aspiration (27).

5. Aube de rotor (16) selon la revendication 4, dans laquelle le capuchon (51) est conçu pour s'étendre axialement et circonférentiellement pour relier le bord radial externe de la paroi latérale d'aspiration (27) au bord radial externe de la paroi latérale de pression (26) ; et
dans laquelle le rail (53) est disposé au niveau d'une périphérie du capuchon (51).

6. Aube de rotor (16) selon la revendication 5, comprenant en outre :
un passage de refroidissement défini à travers le profil aérodynamique ; et
des orifices de sortie en communication fluidique avec le passage de refroidissement, dans laquelle au moins certains des orifices de sortie (35) sont disposés à travers au moins l'une parmi la paroi latérale de pression (26) et la paroi latérale d'aspiration (27) du profil aérodynamique (25).

7. Aube de rotor (16) selon la revendication 6, dans laquelle le passage de refroidissement (36) est conçu pour faire circuler du liquide de refroidissement à travers un intérieur du profil aérodynamique (25) pendant le fonctionnement, le passage de refroidissement (36) s'étendant radialement entre un canal de liaison formé à travers l'emplanture (21) de la pale de rotor (16) et une liaison avec chacun des orifices de sortie (35) ; et
dans laquelle le bout (50) comprend un bout aminci.

8. Aube de rotor (16) selon la revendication 6 ou 7, dans laquelle le capuchon (51) forme un plancher de la cavité de bout (52) ; et
dans laquelle au moins certains des orifices de sortie (35) sont formés à travers une épaisseur du capuchon (51) de manière à diriger le liquide de refroidissement expulsé de ceux-ci dans la cavité de bout (52) formée sur le capuchon (51).
